# EUROPÄISCHE PATENTSCHRIFT

(11) **EP 3 253 518 B1**
(45) Veröffentlichungstag und Bekanntmachung des Hinweises auf die Patenterteilung: **10.04.2019**
(21) Anmeldenummer: 16702716.8
(22) Anmeldetag: 03.02.2016
(51) Int. Cl.: B23B 29/034, B23Q 5/58, B23Q 17/22

(54) **SCHNEIDWERKZEUGEINRICHTUNG**
CUTTING TOOL DEVICE
APPAREIL À OUTIL DE COUPE

(30) Priorität: 05.02.2015 DE 102015101644
(43) Veröffentlichungstag der Anmeldung: 13.12.2017
(73) Patentinhaber: Wohlhaupter GmbH, 72636 Frickenhausen (DE)
(72) Erfinder: BUCK, Günter, 72584 Hülben (DE)
(74) Vertreter: Hoeger, Stellrecht & Partner Patentanwälte mbB
(86) Internationale Anmeldenummer: PCT/EP2016/052254
(87) Internationale Veröffentlichungsnummer: WO 2016/124630

(56) Entgegenhaltungen:
- EP-A1- 1 758 710
- EP-A1- 2 493 647
- WO-A1-2010/119931
- DE-A1-102009 017 094
- KR-A- 20090 122 588
- US-A- 4 676 127

## Beschreibung

Die Erfindung betrifft eine Schneidwerkzeugeinrichtung mit einem um eine Drehachse drehend antreibbaren Werkzeugkopf, der einen entlang einer Verstellachse verstellbaren Werkzeugschlitten und eine elektrische Messvorrichtung zum Erfassen eines Verstellwegs des Werkzeugschlittens aufweist, und mit einer externen Anzeigevorrichtung, die mit dem Werkzeugkopf mechanisch und elektrisch lösbar verbindbar ist und eine Anzeigeeinheit aufweist zum Anzeigen des Verstellwegs des Werkzeugschlittens.

Aus der Veröffentlichung EP 2 493 647 B1 ist ein Schneidwerkzeug in Form eines Feindrehwerkzeuges bekannt, mit dessen Hilfe hauptsächlich eng tolerierte Bohrungen bearbeitet werden. Der Werkzeugkopf des Feindrehwerkzeugs kann in die Spindel einer Werkzeugmaschine eingespannt und mittels der Werkzeugmaschine um eine Drehachse in Drehung versetzt werden. Der Werkzeugkopf weist einen Werkzeugschlitten auf, an den ein Schneidplattenhalter montierbar ist. Am Schneidplattenhalter lässt sich eine Schneidplatte festlegen, um eine Bohrung spanabhebend zu bearbeiten. Zur Einstellung eines gewünschten Ausdreh- oder Ausbohrradius kann der Werkzeugschlitten mit Hilfe eines separaten Verstellwerkzeuges, beispielsweise eines Mehrkants, bezogen auf die Drehachse des Werkzeugkopfes in radialer Richtung verstellt werden. Der Verstellweg des Werkzeugschlittens kann mittels einer Messvorrichtung des Feindrehwerkzeuges erfasst und dem Benutzer an einer Anzeigeeinheit angezeigt werden. Die Anzeigeeinheit ist in den Werkzeugkopf integriert, so dass der Benutzer beim Verstellen des Werkzeugschlittens den Verstellweg auf einfache Weise an der Anzeigeeinheit ablesen kann. Für Werkzeugköpfe mit einem verhältnismäßig großen Durchmesser hat sich eine derartige Ausgestaltung bewährt. Weist der Werkzeugkopf aber nur eine kleine Bauform auf, so ist die Größe der Anzeigeeinheit limitiert und der Verstellweg kann nicht mehr in gut ablesbarer Weise angezeigt werden.

Aus der EP 1 758 710 B2 ist eine Schneidwerkzeugeinrichtung bekannt, bei der die Anzeigevorrichtung nicht in den Werkzeugkopf sondern in das separate Verstellwerkzeug integriet ist, mit dessen Hilfe der Werkzeugschlitten verstellt werden kann. Der Verstellweg des Werkzeugschlittens kann mittels der Messvorrichtung des Werkzeugkopfes erfasst werden und mittels seitlich am Werkzeugkopf angeordneter Kontaktelemente kann eine elektrische Verbindung hergestellt werden zwischen der Messvorrichtung und der Anzeigevorrichtung des Verstellwerkzeuges.

Aus der Veröffentlichung DE 10 2009 017 094 A1 ist eine Schneidwerkzeugeinrichtung bekannt, bei der Messinformationen von der Messvorrichtung des Werkzeugkopfes per Funk an eine externe Anzeigevorrichtung übertragen werden können. Die Anzeigevorrichtung weist einen Permanentmagneten auf, der als Haltevorrichtung dient und es ermöglicht, die externe Anzeigevorrichtung an einem magnetisierbaren Metallkörper zu fixieren, zum Beispiel an der Werkzeugmaschine. Die Anzeigevorrichtung kann dadurch in einer für eine Bedienperson ergonomisch günstigen Stelle positioniert werden. Allerdings sammeln sich am Permanentmagneten häufig Metallspäne und dies erschwert die Handhabung der Schneidwerkzeugeinrichtung.

Es sind auch Schneidwerkzeugeinrichtungen bekannt, bei der die externe Anzeigevorrichtung über ein Kabel elektrisch mit der Messvorrichtung des Werkzeugkopfes verbunden wird. Hierzu kann ein magnetischer Stecker auf eine komplementär ausgestaltete Schnittstelle des Werkzeugkopfs gesetzt werden, um Messinformation von der Messvorrichtung über das Kabel zur externen Anzeigevorrichtung zu übertragen. Der Benutzer hat die Möglichkeit, mit einer Hand die externe Anzeigevorrichtung zu halten und mit seiner anderen Hand mittels des Verstellwerkzeugs den Werkzeugschlitten zu verstellen. Nachteilig ist an einer derartigen Ausgestaltung, dass der Benutzer nicht beide Hände frei hat, um eine genaue Justierung des Werkzeugschlittens und des Schneidplattenhalters vornehmen zu können.

Aufgabe der vorliegenden Erfindung ist es, eine Schneidwerkzeugeinrichtung der eingangs genannten Art derart weiterzubilden, dass sie eine vereinfachte Handhabung aufweist.

Diese Aufgabe wird durch eine Schneidwerkzeugeinrichtung mit den Merkmalen von Patentanspruch 1 gelöst.

Zum Einstellen des Werkzeugschlittens kann die externe Anzeigevorrichtung der erfindungsgemäßen Schneidwerkzeugeinrichtung am Werkzeugkopf mechanisch festgelegt werden, wobei der Werkzeugkopf keine Drehbewegung ausführt sondern feststeht. Der Benutzer hat beide Hände frei zum Verstellen des Werkzeugschlittens, so dass er den Werkzeugschlitten sehr genau justieren kann. Da die externe Anzeigevorrichtung an dem feststehenden Werkzeugkopf mechanisch festlegbar ist, kann der Benutzer beim Verstellen des Werkzeugschlittens den an der Anzeigeeinheit angezeigten Verstellweg auf einfache Weise ablesen. Die Größe der Anzeigeeinheit ist nicht durch die Baugröße des Werkzeugkopfes vorgegeben sondern kann unabhängig vom Werkzeugkopf ausreichend groß gewählt werden, so dass der angezeigte Verstellweg gut abgelesen werden kann. Die mechanische Festlegung der externen Anzeigevorrichtung am Werkzeugkopf stellt sicher, dass sich die Anzeigevorrichtung beim Einstellvorgang des Werkzeugschlittens nicht unbeabsichtigt vom Werkzeugkopf löst. Die Festlegung am Werkzeugkopf birgt allerdings die Gefahr, dass der Benutzer vor dem Indrehungversetzen des Werkzeugkopfes vergisst, die Anzeigevorrichtung vom Werkzeugkopf abzunehmen. Dies könnte zur Folge haben, dass die Anzeigevorrichtung zusammen mit dem Werkzeugkopf rotiert und von diesem in radialer Richtung weggeschleudert wird. Um dieser Gefahr entgegenzuwirken, ist die Anzeigevorrichtung bei der erfindungsgemäßen Schneidwerkzeugeinrichtung selbsttätig vom Werkzeugkopf lösbar, sobald dieser eine vorgegebene Drehbeschleunigung überschreitet. Wird der Werkzeugkopf zur Bearbeitung eines Werkstücks in Drehung versetzt, so unterliegt es typischerweise starken Drehbeschleunigungen, um seine Nenndrehzahl innerhalb kurzer Zeit zu erreichen. Der kritische Wert der Drehbeschleunigung, bei dessen Überschreiten sich die Anzeigevorrichtung selbsttätig vom Werkzeugkopf löst, kann sehr gering gewählt werden. Dies stellt sicher, dass sich die beim Indrehungversetzen des Werkzeugkopfes versehentlich am Werkzeugkopf verbliebene Anzeigevorrichtung vom Werkzeugkopf selbsttätig löst noch bevor dieser eine hohe Drehzahl erreicht hat, und dies wiederum hat den Vorteil, dass die Anzeigevorrichtung vom rotierenden Werkzeugkopf allenfalls geringfügig in radiale Richtung geschleudert werden kann, sie fällt vielmehr aufgrund ihrer Gewichtskraft mehr oder weniger vertikal nach unten, wenn der Werkzeugkopf die vorgegebene Drehbeschleunigung überschreitet. Dadurch wird sichergestellt, dass die sich vom Werkzeugkopf selbsttätig lösende Anzeigevorrichtung keine Verletzungsgefahr für den Benutzer darstellt, falls er beim Indrehungversetzen des Werkzeugkopfes vergisst, die Anzeigevorrichtung vom Werkzeugkopf zu lösen.

Gemäß der Erfindung weist die Anzeigevorrichtung mindestens ein Halteglied auf, wobei der Werkzeugkopf von dem mindestens einen Halteglied mit einer vorgebbaren Haltekraft beaufschlagbar ist. Durch herstellerseitiges Vorgeben der Haltekraft kann auf konstruktiv einfache Weise sichergestellt werden, dass sich die Anzeigevorrichtung selbsttätig vom Werkzeugkopf löst, wenn dieser beim Indrehungversetzen eine vorgegebene Drehbeschleunigung überschreitet.

Das mindestens eine Halteglied weist einen Einstellmechanismus auf zum Einstellen der vom Halteglied auf den Werkzeugkopf ausgeübten Haltekraft. Der Einstellmechanismus kann beispielsweise im Herstellerwerk der Anzeigevorrichtung betätigt werden zur Vorgabe einer bestimmten Haltekraft, die vom Halteglied auf den Werkzeugkopf ausgeübt wird, um einerseits sicherzustellen, dass die Anzeigevorrichtung am feststehenden Werkzeugkopf mechanisch festlegbar ist, und um andererseits sicherzustellen, dass sich die Anzeigevorrichtung vom Werkzeugkopf selbstständig löst, wenn dieser eine vorgegebene Drehbeschleunigung überschreitet.

Der Einstellmechanismus kann beispielsweise eine Stellschraube aufweisen. Dies erleichtert das Einstellen der Haltekraft.

Wird der Werkzeugkopf mit der daran mechanisch festgelegten Anzeigevorrichtung versehentlich in Drehung versetzt, so erfährt der Werkzeugkopf eine starke Drehbeschleunigung. Erfindungsgemäß wurde erkannt, dass die Drehbeschleunigung des Werkzeugkopfes zum selbsttätigen Ablösen der Anzeigevorrichtung vom Werkzeugkopf genutzt werden kann. Hierzu ist es von Vorteil, wenn die Anzeigevorrichtung - vorzugsweise in einer schräg oder senkrecht zur Drehachse ausgerichteten Fügerichtung - an eine Mantelfläche des Werkzeugkopfes anlegbar ist. Die Anzeigevorrichtung kann somit seitlich am Werkzeugkopf positioniert werden. Wird der Werkzeugkopf mit der daran gehaltenen Anzeigevorrichtung versehentlich zur Bearbeitung eines Werkstücks um seine Drehachse in Drehung versetzt, so unterliegt die an der Außenseite des Werkzeugkopfes anliegende Anzeigevorrichtung aufgrund ihrer Trägheit beachtlichen Kippmomenten, die von der Drehbeschleunigung des Werkzeugkopfes abhängig sind. Je größer die Drehbeschleunigung ist, desto größer sind auch die in Umfangsrichtung des Werkzeugkopfes auf die Anzeigevorrichtung einwirkenden Kippmomente. Die mechanische und elektrische Verbindung der Anzeigevorrichtung mit dem Werkzeugkopf kann derart ausgestaltet werden, dass sich die Anzeigevorrichtung bei Einwirkung eines in Umfangsrichtung des Werkzeugkopfes wirkenden Kippmoments vorgegebener Größe selbsttätig vom Werkzeugkopf löst.

Günstig ist es, wenn der Werkzeugkopf eine zylindrische Mantelfläche aufweist und die Anzeigevorrichtung eine ebene Rückseite aufweist, mit der sie die zylindrische Mantelfläche linienförmig kontaktiert. Zu beiden Seiten des linienförmigen Kontaktbereichs steht somit die Anzeigevorrichtung mit ihrer Rückseite vom Werkzeugkopf ab. Dies erleichtert das selbsttätige Lösen der Anzeigevorrichtung von dem Werkzeugkopf, sobald dieser eine vorgegebene Drehbeschleunigung überschreitet.

Es kann vorgesehen sein, dass die Anzeigevorrichtung mit dem feststehenden Werkzeugkopf lösbar verrastbar ist. Hierzu können im Sinne einer Rastverbindung miteinander zusammenwirkende Rastelemente zum Einsatz kommen, die an der Anzeigevorrichtung und am Werkzeugkopf angeordnet sind, wobei die Rastverbindung selbsttätig lösbar ist, sobald der Werkzeugkopf eine vorgegebene Drehbeschleunigung überschreitet. Die Rastelemente können beispielsweise federnd ineinandergreifen. Günstig ist es, wenn die Federkraft der Rastelemente vorgebbar ist. Dies gibt die Möglichkeit, die Federkraft im Herstellerwerk der Anzeigevorrichtung derart vorzugeben, dass sich die Anzeigevorrichtung bei Überschreiten einer vorgegebenen, verhältnismäßig geringen Drehbeschleunigung des Werkzeugkopfes selbsttätig vom Werkzeugkopf löst.

Besonders günstig ist es, wenn das mindestens eine Halteglied mit dem Werkzeugkopf mechanisch in Eingriff bringbar ist. Das Halteglied ist somit eingriffsfähig und durch den Eingriff des Halteglieds mit dem Werkzeugkopf kann auf konstruktiv einfache Weise sichergestellt werden, dass die Anzeigevorrichtung am feststehenden Werkzeugkopf mechanisch belastbar festlegbar und bei Überschreiten einer vorgegebenen Drehbeschleunigung vom Werkzeugkopf lösbar ist.

Von besonderem Vorteil ist es, wenn die Anzeigevorrichtung zwei Halteglieder aufweist, die in zwei in Drehrichtung des Werkzeugkopfes im Abstand zueinander angeordnete Halteausnehmungen einsetzbar sind. Bei einer derartigen Ausgestaltung weist der Werkzeugkopf zwei Halteausnehmungen auf, die in Drehrichtung des Werkzeugkopfes im Abstand zueinander angeordnet sind und in die jeweils ein Halteglied der Anzeigevorrichtung eingesetzt werden kann.

Günstigerweise übt das in eine Halteausnehmung eingesetzte Halteglied eine vorgebbare Haltekraft auf eine Wandung der Halteausnehmung aus.

Die Halteausnehmungen sind günstigerweise an ihren einander abgewandten Außenseiten offen. Die Halteausnehmungen können beispielsweise halbseitig offen ausgebildet sein. Dies erleichtert das Ablösen der Halteglieder von den Halteausnehmungen, sobald der Werkzeugkopf eine vorgegebene Drehbeschleunigung überschreitet.

Die Halteausnehmungen können beispielsweise jeweils eine ebene Bodenwand und eine in der Draufsicht auf die Halteausnehmungen U-förmige Seitenwand aufweisen. Die Seitenwände können jeweils zwei einander gegenüberliegende geradlinige Endabschnitte aufweisen, die über einen bogenförmigen Mittelabschnitt miteinander verbunden sind.

An ihren einander zugewandten Innenseiten weisen die Halteausnehmungen bei einer vorteilhaften Ausführungsform der Erfindung jeweils mindestens ein Rastelement auf, das mit einem zugeordneten Rastelement des in die Halteausnehmung einsetzbaren Halteglieds zusammenwirkt.

Es kann beispielsweise vorgesehen sein, dass an den einander zugewandten Innenseiten der Halteausnehmungen jeweils eine Rastvertiefung angeordnet ist, in die ein Rastvorsprung der Halteglieder einrastet. Hierbei ist es von Vorteil, wenn die in die Rastvertiefungen eintauchenden Rastvorsprünge mit einer vorgebbaren Federkraft in Richtung auf die Rastvertiefungen beaufschlagbar sind. Die Federkraft ist günstigerweise mittels eines Einstellmechanismus der Halteglieder einstellbar.

Günstig ist es, wenn die Halteglieder mit den Halteausnehmungen einen Formschluss ausbilden. Mittels des Formschlusses kann auf konstruktiv einfache Weise sichergestellt werden, dass sich die Anzeigevorrichtung nur dann selbsttätig vom Werkzeugkopf löst, wenn der Werkzeugkopf eine vorgegebene Drehbeschleunigung überschreitet. Insbesondere kann durch den Formschluss sichergestellt werden, dass sich die externe Anzeigevorrichtung nicht unbeabsichtigt vom feststehenden Werkzeugkopf löst.

Bei einer vorteilhaften Ausgestaltung der Erfindung nehmen die Halteglieder einen sich in Drehrichtung des Werkzeugkopfes über einen Winkelbereich von weniger als 180° erstreckenden Halteabschnitt des Werkzeugkopfes zwischen sich auf. Die beiden Halteglieder können den Halteabschnitt des Werkzeugkopfes zwischen sich einspannen und dadurch die Anzeigevorrichtung am feststehenden Werkzeugkopf mechanisch festlegen.

Günstig ist es, wenn sich der Halteabschnitt in Drehrichtung des Werkzeugkopfes über einen Winkelbereich von weniger als 90° erstreckt.

Bei einer bevorzugten Ausgestaltung der Erfindung weisen die Halteglieder einander gegenüberliegende federnde Druckstücke auf. Mittels der federnden Druckstücke kann von den Haltegliedern eine Haltekraft auf den Werkzeugkopf ausgeübt werden.

Die federnden Druckstücke sind günstigerweise fluchtend zueinander ausgerichtet.

Es kann vorgesehen sein, dass die Druckstücke jeweils einen Druckkörper aufweisen, der von einer Druckfeder mit einer Federkraft beaufschlagbar ist, wobei die Federkräfte der beiden Druckstücke einander entgegengerichtet sind. Die Federkräfte ermöglichen es, die externe Anzeigevorrichtung am feststehenden Werkzeugkopf zu fixieren, indem die von den Federkräften beaufschlagten Druckkörper einen sich in Drehrichtung des Werkzeugkopfes über einen Winkelbereich von weniger als 180° erstreckenden Halteabschnitt des Werkzeugkopfes zwischen sich einspannen.

Von Vorteil ist es, wenn der Abstand, den die beiden Druckstücke zueinander einnehmen, veränderbar ist. Dies gibt die Möglichkeit, die Druckstücke in einem kleineren oder größeren Abstand zueinander zu positionieren und dadurch die von den Druckstücken auf den dazwischen liegenden Halteabschnitt des Werkzeugkopfes ausgeübten Haltekräfte einzustellen.

Bei einer bevorzugten Ausgestaltung der Erfindung weisen die Halteglieder jeweils ein Führungsteil auf, in dem ein Druckstück angeordnet ist. Es kann beispielsweise vorgesehen sein, dass die Druckstücke jeweils in ein Führungsteil eingeschraubt sind. Die Drückstücke können hierzu ein Außengewinde aufweisen, das mit einem Innengewinde eines Führungsteils in Eingriff steht. Die Führungsteile können nach Art einer Hülse ausgestaltet sein.

Die Halteglieder sind günstigerweise als Vorsprünge ausgestaltet, die aus einer dem Werkzeugkopf zugewandten Rückseite der Anzeigevorrichtung herausragen. Bevorzugt liegt die Rückseite der Anzeigevorrichtung an einer Mantelfläche des Werkzeugkopfes an. Symmetrisch im Abstand zum Anlagebereich können die jeweils einen Vorsprung ausbildenden Halteglieder angeordnet sein, die in zugeordnete Halteausnehmungen des Werkzeugkopfes eintauchen können.

Zur Herstellung einer elektrischen Verbindung zwischen der Messvorrichtung des Werkzeugkopfes und der Anzeigeeinheit der Anzeigevorrichtung weisen die Anzeigevorrichtung und der Werkzeugkopf bei einer vorteilhaften Ausgestaltung der Erfindung einander zugeordnete elektrische Kontaktelemente auf.

Die Kontaktelemente der Anzeigevorrichtung und/oder des Werkzeugkopfes können federnd ausgebildet sein, so dass die Kontaktelemente der Anzeigevorrichtung und des Werkzeugkopfes gegeneinander gedrückt werden, wenn die Anzeigevorrichtung am feststehenden Werkzeugkopf mechanisch und elektrisch gehalten ist.

Bevorzugt sind die Kontaktelemente der Anzeigevorrichtung bezogen auf die Drehachse des Werkzeugkopfes axial versetzt zu den Haltegliedern angeordnet. Die Kontaktelemente des Werkzeugkopfes nehmen bei einer derartigen Ausgestaltung eine Position axial versetzt zum Haltebereich des Werkzeugkopfes ein, der sich zwischen den beiden Halteausnehmungen erstreckt, in die die Halteglieder einsetzbar sind.

Bevorzugt weist der Werkzeugkopf eine Kontaktausnehmung auf, in der die Kontaktelemente des Werkzeugkopfes angeordnet sind. Die Kontaktausnehmung bildet eine Vertiefung, die bevorzugt an einer zylindrischen Mantelfläche des Werkzeugkopfes angeordnet ist und die die Kontaktelemente des Werkzeugkopfes aufnimmt. Die Kontaktelemente der Anzeigevorrichtung können in die Kontaktausnehmung eintauchen und die dort angeordneten Kontaktelemente des Werkzeugkopfes elektrisch und mechanisch kontaktieren.

Wie eingangs erwähnt, kann der Werkzeugkopf eine geringe Baugröße aufweisen. Insbesondere kann vorgesehen sein, dass der Durchmesser des Werkzeugkopfes maximal 20 mm beträgt, insbesondere 19 mm. Durch den Einsatz der externen Anzeigevorrichtung kann dem Benutzer trotz der verhältnismäßig geringen Baugröße des Werkzeugkopfes eine gut ablesbare Anzeigeeinheit bereitgestellt werden, die es ihm ermöglicht, den Werkzeugschlitten und mit diesem auch den Schneidplattenhalter und die daran festgelegte Schneidplatte zuverlässig zu justieren.

Die nachfolgende Beschreibung einer vorteilhaften Ausführungsform der Erfindung dient im Zusammenhang mit der Zeichnung der näheren Erläuterung. Es zeigen:
- Figur 1:: eine perspektivische Darstellung einer Schneidwerkzeugeinrichtung mit einem Werkzeugkopf und einer seitlich am Werkzeugkopf montierten externen Anzeigevorrichtung;
- Figur 2:: eine Seitenansicht der Schneidwerkzeugeinrichtung in Richtung von Pfeil A aus Figur 1;
- Figur 3:: eine Seitenansicht der Schneidwerkzeugeinrichtung in Richtung von Pfeil B aus Figur 1;
- Figur 4:: eine schematische Schnittansicht der Schneidwerkzeugeinrichtung entlang der Linie 4-4 in Figur 3;
- Figur 5:: eine perspektivische Darstellung der Schneidwerkzeugeinrichtung aus Figur 1 in Richtung auf eine Vorderseite der externen Anzeigevorrichtung, wobei die Anzeigevorrichtung einen Abstand zum Werkzeugkopf einnimmt;

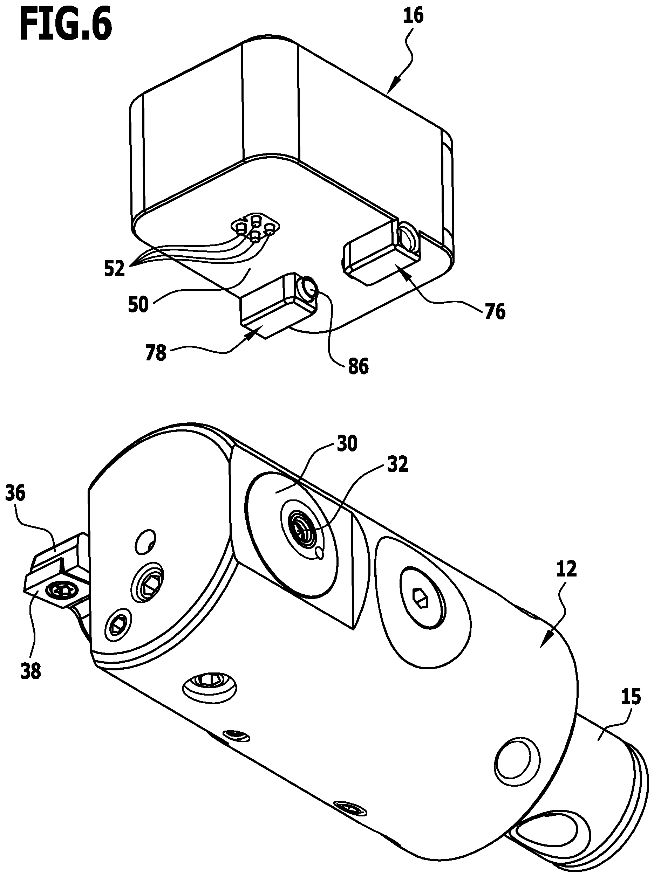

- Figur 6:: eine perspektivische Darstellung der Schneidwerkzeugeinrichtung aus Figur 1 in Richtung auf eine Rückseite der externen Anzeigevorrichtung, wobei die Anzeigevorrichtung einen Abstand zum Werkzeugkopf einnimmt, und

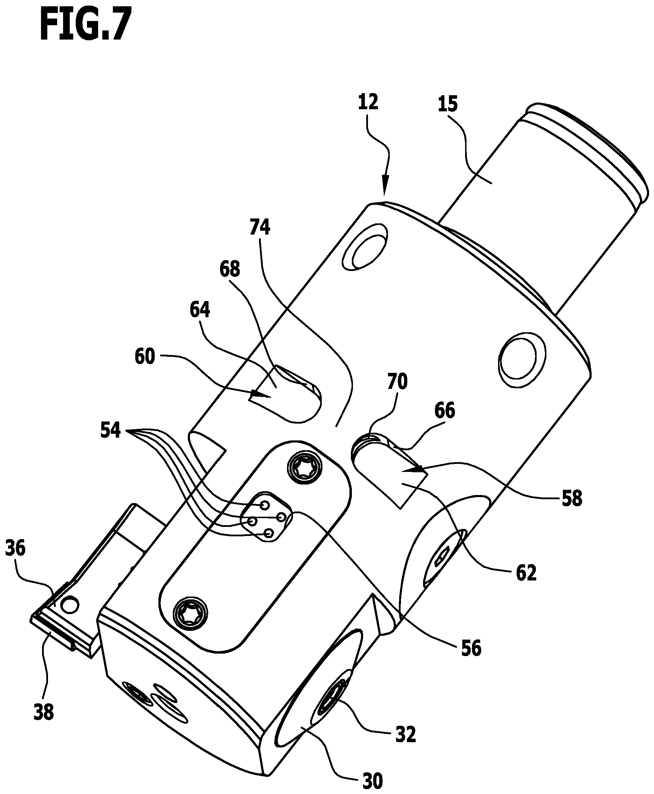

- Figur 7:: eine perspektivische Darstellung des Werkzeugkopfes der Schneidwerkzeugeinrichtung aus Figur 1.

In der Zeichnung ist eine vorteilhafte Ausführungsform einer erfindungsgemäßen Schneidwerkzeugeinrichtung schematisch dargestellt und insgesamt mit dem Bezugszeichen 10 belegt. Sie umfasst einen Werkzeugkopf 12, der um eine Drehachse 14 drehend antreibbar ist, und eine externe Anzeigevorrichtung 16. Die Anzeigevorrichtung ist seitlich an eine Mantelfläche 18 des Werkzeugkopfes anlegbar und an dem Werkzeugkopf 12 mechanisch festlegbar, sofern der Werkzeugkopf 12 keine Drehbewegung ausführt sondern feststeht. Wird der Werkzeugkopf 12 um die Drehachse 14 in Drehung versetzt, so löst sich die Anzeigevorrichtung 16 selbsttätig vom Werkzeugkopf 12 ab, sobald dieser eine vorgegebene, verhältnismäßig geringe Drehbeschleunigung überschreitet. Dies wird nachfolgend noch näher erläutert.

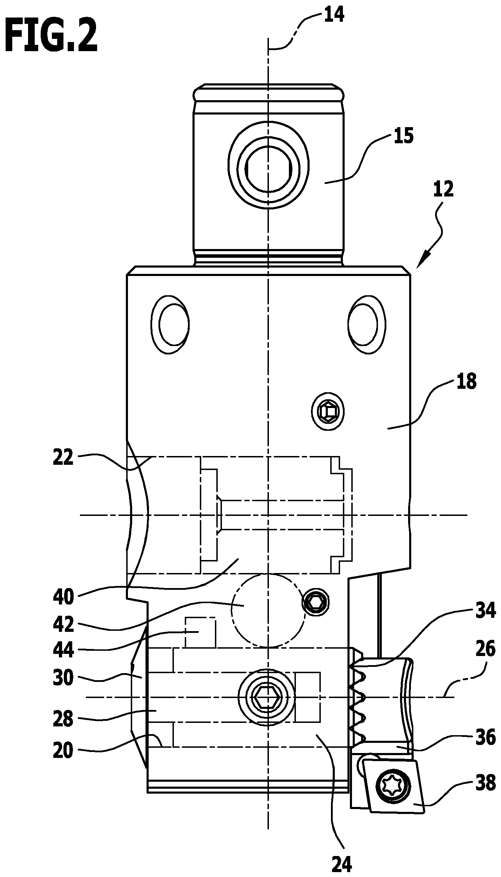

Wie insbesondere aus Figur 2 deutlich wird, weist der Werkzeugkopf 12 einen Schaft 15 auf, der in eine Spindel einer Werkzeugmaschine eingespannt werden kann. Außerdem weist der Werkzugkopf eine vordere Ausnehmung 20 und eine hintere Ausnehmung 22 auf, die jeweils senkrecht zur Drehachse 14 ausgerichtet sind. In der vorderen Ausnehmung 20 ist in bekannter Weise ein Werkzeugschlitten 24 verschiebbar gelagert, der entlang einer Verstellachse 26 verstellt werden kann. Die Verstellachse 26 ist senkrecht zur Drehachse 14 ausgerichtet. Zum Verstellen des Werkzeugschlittens 24 kommt eine Spindel 28 zum Einsatz, an der der Werkzeugschlitten 24 gehalten ist und die an einem Deckel 30 des Werkzeugkopfes 12 drehbar gelagert ist. Im Bereich des Deckels 30 bildet die Spindel 28 eine Eingriffsöffnung 32 aus, in die ein Verstellwerkzeug drehfest eingreifen kann. Das Verstellwerkzeug ist bevorzugt als Mehrkant ausgestaltet. Durch Verdrehen der Spindel 28 um die Verstellachse 26 kann der Werkzeugschlitten 24 entlang der Verstellachse 26 verstellt werden.

An seiner dem Deckel 30 abgewandten Stirnseite 34 bildet der Werkzeugschlitten 24 eine Montagefläche aus, an der ein Schneidplattenträger 36 festgelegt werden kann. Am Schneidplattenträger 36 kann in üblicher Weise eine Schneidplatte 38 fixiert werden. Mittels der Schneidplatte 38 kann ein Werkstück spanend bearbeitet werden.

Die hintere Ausnehmung 22 nimmt in bekannter Weise einen Ausgleichsschlitten 40 auf, der über eine Zahnwalze 42 mit dem Werkzeugschlitten 24 derart gekoppelt ist, dass er beim Verstellen des Werkzeugschlittens 24 eine gegenläufige Bewegung ausführt. Wird der Werkzeugschlitten 24 mittels der Spindel 28 längs der Verstellachse 26 verschoben, so führt der Ausgleichsschlitten 40 eine entgegen der Bewegung des Werkzeugschlittens 24 gerichtete Ausgleichsbewegung aus. Dies hat zur Folge, dass sich die jeweiligen Massen des Werkzeugschlittens 24 und des Ausgleichsschlittens 40 in der Weise verlagern, dass der Werkzeugkopf 12 insgesamt stets ausgewuchtet ist.

Zum Erfassen des Verstellwegs des Werkzeugschlittens 24 wird dessen Position von einer elektronischen Messvorrichtung 44 berührungslos erfasst. Derartige Messvorrichtungen 44 sind dem Fachmann an sich bekannt. Mittels der Messvorrichtung 44 ist der Verstellweg des Werkzeugschlittens 24 berührungslos erfassbar.

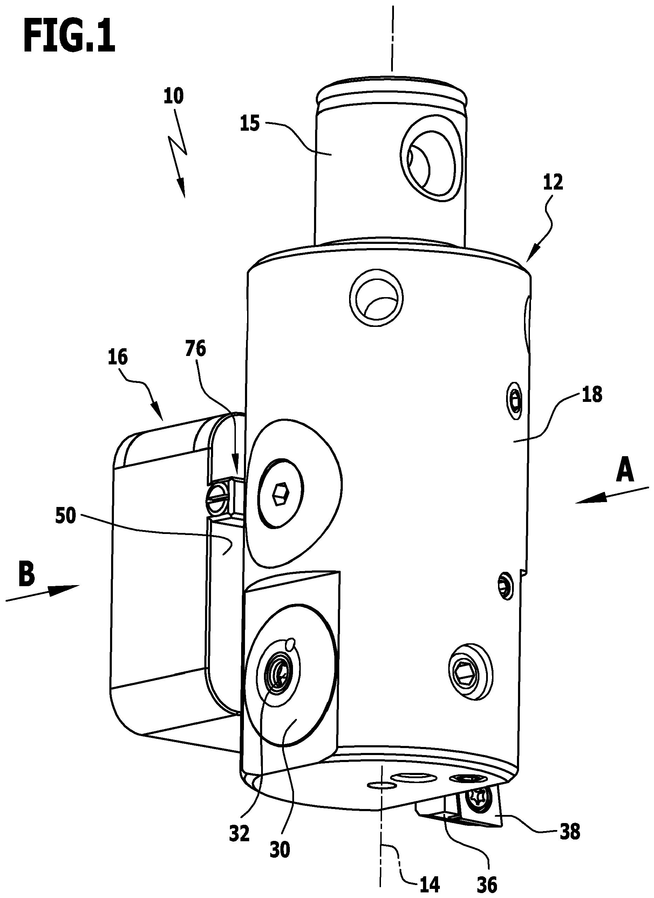

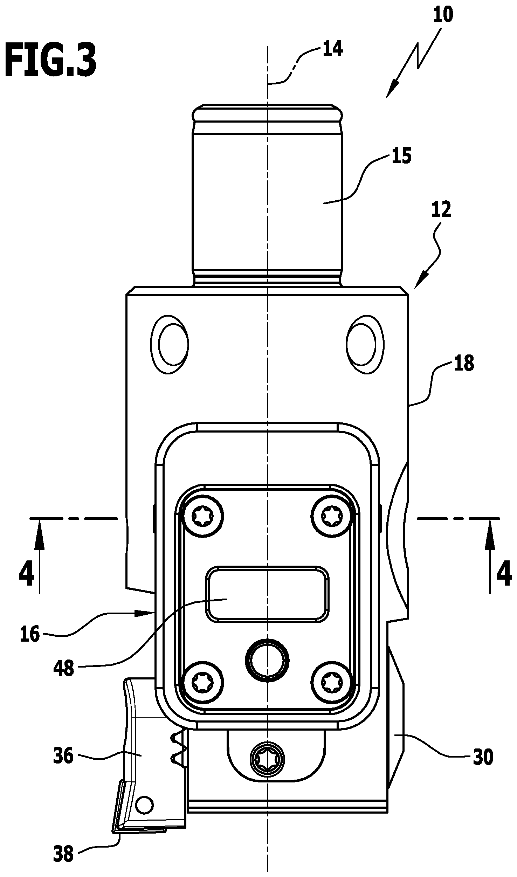

Die externe Anzeigevorrichtung 16 weist eine Anzeigeeinheit 48 auf, an der der von der Messvorrichtung 44 erfasste Verstellweg gut ablesbar angezeigt werden kann. Hierzu kann die Anzeigeeinheit 48 mit der Messvorrichtung 44 elektrisch verbunden werden. Die Anzeigevorrichtung 16 weist hierzu auf ihrer dem Werkzeugkopf 12 zugewandten Rückseite 50 federnde erste Kontaktelemente 52 auf, die zweite Kontaktelemente 54 des Werkzeugkopfes 12 elektrisch und mechanisch kontaktieren, wenn die externe Anzeigevorrichtung 16, wie in den Figuren 1 bis 3 dargestellt, seitlich am Werkzeugkopf 12 anliegt. Die zweiten Kontaktelemente 54 sind in einer Kontaktausnehmung 56 des Werkzeugkopfes 12 angeordnet.

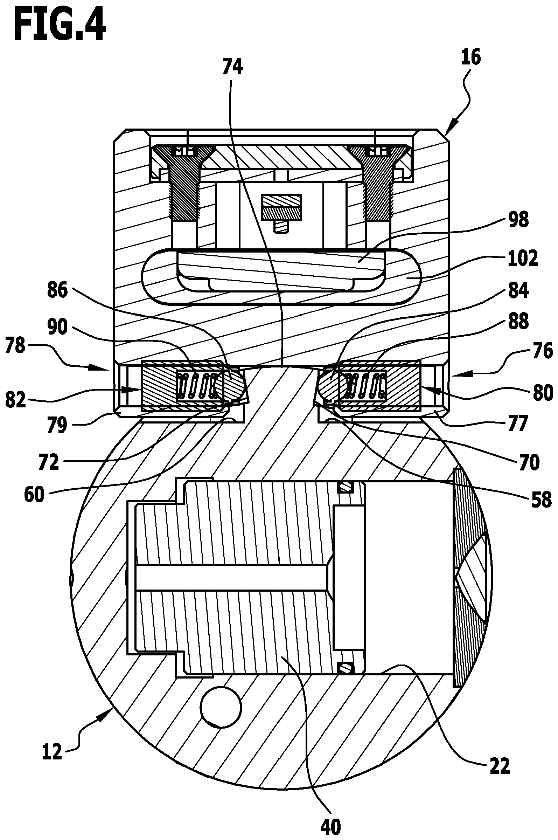

Bezogen auf die Drehachse 14 in Richtung auf den Schaft 15 axial versetzt zur Kontaktausnehmung 56 weist der Werkzeugkopf 12 symmetrisch zueinander ausgebildete Halteausnehmungen 58, 60 auf, die in Umfangsrichtung des Werkzeugkopfes 12 im Abstand zueinander angeordnet und jeweils in Form einer halbseitig offenen Ausnehmung ausgebildet sind. Sie weisen jeweils eine ebene Bodenwand 62 bzw. 64 auf und eine U-förmige Seitenwand 66 bzw. 68. Jede Seitenwand 66, 68 weist einander gegenüberliegende geradlinige Endabschnitte auf, die über einen bogenförmigen Mittelabschnitt miteinander verbunden sind. In den Mittelabschnitten ist jeweils eine Rastvertiefung 70, 72 angeordnet. Dies wird insbesondere aus Figur 4 deutlich. Die Rastvertiefungen 70, 72 sind keilförmig ausgestaltet und bilden eine Hinterschneidung aus.

Im Bereich zwischen den beiden Halteausnehmungen 58, 60 bildet der Werkzeugkopf 12 einen Haltebereich 74 aus, der sich in Umfangsrichtung des Werkzeugkopfes 12 über einen Winkelbereich von weniger als 180° erstreckt. Im dargestellten Ausführungsbeispiel erstreckt sich der Haltebereich 74 in Umfangsrichtung des Werkzeugkopfes 12 über einen Winkelbereich von etwa 20°. Axial versetzt zum Haltebereich 74 ist die Kontaktausnehmung 56 angeordnet.

Zur mechanischen Festlegung an der Mantelfläche 18 des Werkzeugkopfes 12 weist die im Wesentlichen quaderförmig ausgestaltete Anzeigevorrichtung 16 an ihrer Rückseite 50 zwei Halteglieder 76, 78 auf, die als Vorsprünge ausgestaltet sind. Die Halteglieder 76, 78 können in die Halteausnehmungen 58, 60 eingesetzt werden, wobei sie an den geradlinigen Endabschnitten der Seitenwände 66, 68 anliegen und einen Formschluss mit den Halteausnehmungen 58, 60 ausbilden.

Die Halteglieder 76, 78 weisen jeweils ein Führungsteil in Form einer Führungshülse 77 bzw. 79 auf, in die ein federndes Druckstück 80 bzw. 82 eingeschraubt ist. Die Druckstücke 80, 82 sind jeweils mit einem Außengewinde versehen und die Führungshülsen 77, 79 weisen jeweils ein Innengewinde auf. Die Druckstücke 80, 82 umfassen jeweils einen kugeligen Druckkörper 84 bzw. 86 und eine Druckfeder 88 bzw. 90, die den Druckkörper 84 bzw. 86 mit einer Federkraft beaufschlagt. Die auf die Druckkörper 84, 86 einwirkenden Federkräfte sind einander entgegengerichtet. Die Druckstücke 80, 82 sind ebenso wie die Führungshülsen 77, 79 fluchtend zueinander ausgerichtet, so dass die Druckkörper 84, 86 den Haltebereich 74 des Werkzeugkopfes 12 zwischen sich einspannen. Hierbei tauchen die kugeligen Druckkörper 84, 86 jeweils in eine Rastvertiefung 70 bzw. 72 der Seitenwände 66, 68 der Halteausnehmungen 58, 60 ein. Dies wird insbesondere aus Figur 4 deutlich.

Die von den Druckkörpern 84, 86 auf den Haltebereich 74 ausgeübte Haltekraft kann dadurch eingestellt werden, dass die Druckstücke 80, 82 mehr oder weniger weit in die Führungshülsen 77, 79 eingeschraubt werden. Die federnden Druckstücke 80, 82 bilden somit in Kombination mit den Führungshülsen 77, 79 Einstellmechanismen aus zum Einstellen der Haltekraft, die von der Anzeigevorrichtung 16 auf den Werkzeugkopf 12 ausgeübt wird. Die Haltekräfte wirken auf die keilförmigen Rastvertiefungen 70, 72. Durch Veränderung des Keilwinkels kann die zum Ablösen der Anzeigevorrichtung 16 vom Werkzeugkopf 12 erforderliche Kraft ebenfalls verändert werden.

Zusätzlich zur Anzeigeeinheit 48 weist die Anzeigevorrichtung 16 eine Energieversorgungseinheit auf in Form einer Batterie 98, die in einer Batteriehalterung 102 angeordnet ist. Die Batteriehalterung 102 ist nach Art einer Schublade ausgestaltet und kann zusammen mit der Batterie 98 der Anzeigevorrichtung 16 entnommen werden, um die Batterie 98 auszuwechseln. Mit Hilfe der Batterie 98 kann der Messvorrichtung 44 des Werkzeugkopfes 12 elektrische Energie zur Verfügung gestellt werden. Die elektrische Energie wird ebenso wie die von der Messvorrichtung 44 bereitgestellten Messinformationen über die ersten und zweiten Kontaktelemente 52, 54 übertragen, wenn die Anzeigevorrichtung 16 an der Mantelfläche 18 des Werkzeugkopfes 12 festgelegt ist.

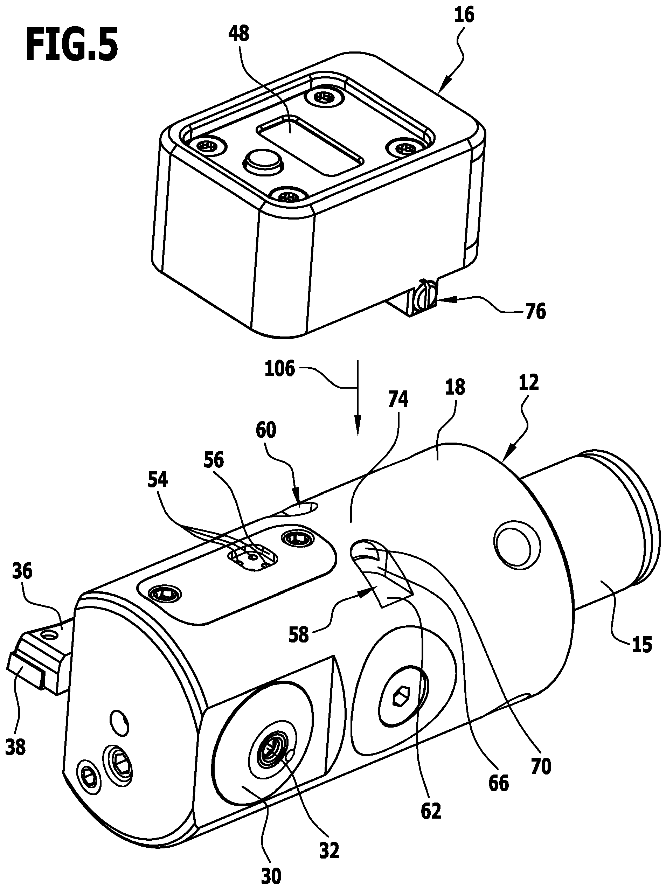

Die Anzeigevorrichtung 16 kann in einer in Figur 5 durch den Pfeil 106 symbolisierten Fügerichtung, die senkrecht zur Drehachse 14 ausgerichtet ist, seitlich an die Mantelfläche 18 des zylindrischen Werkzeugkopfes 12 angelegt werden, so dass die Halteglieder 76, 78 in die Halteausnehmungen 58, 60 eintauchen und die Druckkörper 84, 86 in die Rastvertiefungen 70, 72 einrasten. Die Haltekraft, die von der Anzeigevorrichtung 16 auf den Werkzeugkopf 12 ausgeübt wird, kann eingestellt werden, indem die Druckstücke 80, 82 mehr oder weniger weit in die Führungshülsen 77, 79 eingeschraubt werden. Durch Vorgabe der Haltekraft kann sichergestellt werden, dass sich die Anzeigevorrichtung 16 selbsttätig von dem Werkzeugkopf 12 löst, sobald sich die Drehzahl des Werkzeugkopfes 12 innerhalb eines kurzen Zeitintervalls stark ändert, d.h. sobald die Drehbeschleunigung des Werkzeugkopfes 12 einen vorgegebenen Grenzwert überschreitet. Der Grenzwert kann derart gewählt werden, dass sichergestellt ist, dass sich die Anzeigevorrichtung 16 beim Indrehungversetzen des Werkzeugkopfs 12 löst, noch bevor dieser eine hohe Drehzahl aufweist. Beim selbsttätigen Ablösen der Anzeigevorrichtung wird diese daher allenfalls geringfügig in radialer Richtung beschleunigt.

Geht der Werkzeugkopf ausgehend von einer Ruhestellung in eine Drehbewegung über, so wirkt die Trägheit der seitlich am Werkzeugkopf 12 angeordneten Anzeigevorrichtung 16 der Drehbewegung entgegen. Dies hat zur Folge, dass die Anzeigevorrichtung 16 einem Kippmoment unterliegt. Das Kippmoment ist umso größer, je größer die Drehbeschleunigung des Werkzeugkopfes 12 ist. Überschreitet die Drehbeschleunigung einen vorgegebenen Wert, so löst sich die Anzeigevorrichtung selbsttätig vom Werkzeugkopf 12, indem sich die Halteglieder 76, 78 von den Halteausnehmungen 58, 60 ablösen. Die Größe der Haltekraft, die die Halteglieder auf den Werkzeugkopf 12 ausüben, bestimmt die Drehbeschleunigung, bei deren Überschreitung sich die Anzeigevorrichtung vom Werkzeugkopf 12 ablöst. Die Haltekraft wird durch den Abstand beeinflusst, den die Druckkörper 84, 86 zueinander aufweisen, und kann eingestellt werden, indem die Druckstücke 80, 82 mehr oder weniger weit in die Führungshülsen 77, 79 eingeschraubt werden.

Am feststehenden Werkzeugkopf 12 lässt sich die Anzeigevorrichtung 16 zuverlässig festlegen, so dass der Benutzer beide Hände frei hat, um den Werkzeugschlitten 24 und damit auch die Schneidplatte 38 genau einzustellen. Vergisst der Benutzer nach erfolgter Einstellung, die Anzeigevorrichtung 16 vom Werkzeugkopf 12 zu lösen und versetzt er den Werkzeugkopf 12 in Drehung, so löst sich die Anzeigevorrichtung 16 bereits bei sehr geringer Drehzahl selbsttätig vom Werkzeugkopf und fällt aufgrund seines Gewichtes vertikal nach unten. Es besteht daher keine Gefahr, dass die versehentlich am Werkzeugkopf 12 verbliebene Anzeigevorrichtung 16 vom Werkzeugkopf 12 nach Art eines Geschosses in radialer Richtung weggeschleudert wird und eine Gesundheitsgefährdung für den Benutzer darstellt.

## Patentansprüche

1. Schneidwerkzeugeinrichtung mit einem um eine Drehachse (14) drehend antreibbaren Werkzeugkopf (12), der einen entlang einer Verstellachse (26) verstellbaren Werkzeugschlitten (24) und eine elektrische Messvorrichtung (44) zum Erfassen eines Verstellwegs des Werkzeugschlittens (24) aufweist, und mit einer externen Anzeigevorrichtung (16), die mit dem Werkzeugkopf (12) mechanisch und elektrisch lösbar verbindbar ist und eine Anzeigeeinheit (48) aufweist zum Anzeigen des Verstellwegs des Werkzeugschlittens (24), **dadurch gekennzeichnet, dass** die Anzeigevorrichtung (16) zum Einstellen des Werkzeugschlittens (24) am feststehenden Werkzeugkopf (12) mechanisch festlegbar und bei Überschreiten einer vorgebbaren Drehbeschleunigung des Werkzeugkopfes (12) selbsttätig vom Werkzeugkopf (12) lösbar ist, wobei die Anzeigevorrichtung (16) mindestens ein Halteglied (76, 78) aufweist und der Werkzeugkopf (12) von dem mindestens einen Halteglied (76, 78) mit einer vorgebbaren Haltekraft beaufschlagbar ist, und wobei das mindestens eine Halteglied (76, 78) einen Einstellmechanismus (77, 79, 84, 86) aufweist zum Einstellen der vom Halteglied (76, 78) auf den Werkzeugkopf (12) ausgeübten Haltekraft.

2. Schneidwerkzeugeinrichtung nach Anspruch 1, **dadurch gekennzeichnet, dass** die Anzeigevorrichtung (16) in einer schräg oder senkrecht zur Drehachse (14) ausgerichteten Fügerichtung (106) an eine Mantelfläche (18) des Werkzeugkopfes (12) anlegbar ist.

3. Schneidwerkzeugeinrichtung nach Anspruch 2, **dadurch gekennzeichnet, dass** der Werkzeugkopf (12) eine zylindrische Mantelfläche (18) aufweist und dass die Anzeigevorrichtung (16) eine ebene Rückseite (50) aufweist, mit der sie die zylindrische Mantelfläche (18) linienförmig kontaktiert.

4. Schneidwerkzeugeinrichtung nach einem der voranstehenden Ansprüche, **dadurch gekennzeichnet, dass** die Anzeigevorrichtung (16) mit dem feststehenden Werkzeugkopf (12) lösbar verrastbar ist.

5. Schneidwerkzeugeinrichtung nach einem der voranstehenden Ansprüche, **dadurch gekennzeichnet, dass** das mindestens eine Halteglied (76, 78) mit dem Werkzeugkopf (12) in Eingriff bringbar ist.

6. Schneidwerkzeugeinrichtung nach einem der voranstehenden Ansprüche, **dadurch gekennzeichnet, dass** die Anzeigevorrichtung (16) zwei Halteglieder (76, 78) aufweist, die in zwei in Drehrichtung des Werkzeugkopfes (12) im Abstand zueinander angeordnete Halteausnehmungen (58, 60) einsetzbar sind.

7. Schneidwerkzeugeinrichtung nach Anspruch 6, **dadurch gekennzeichnet, dass** die Halteausnehmungen (58, 60) an ihren einander abgewandten Außenseiten offen sind.

8. Schneidwerkzeugeinrichtung nach Anspruch 6 oder 7, **dadurch gekennzeichnet, dass** die Halteausnehmungen an ihren einander zugewandten Innenseiten (66, 68) jeweils mindestens ein Rastelement (70, 72) aufweisen, das mit einem zugeordneten Rastelement (84, 86) des in die Halteausnehmung (58, 60) einsetzbaren Halteglieds (76, 78) zusammenwirkt.

9. Schneidwerkzeugeinrichtung nach einem der Ansprüche 6, 7 oder 8, **dadurch gekennzeichnet, dass** die beiden Halteglieder (76, 78) mit den Halteausnehmungen (58, 60) jeweils einen Formschluss ausbilden.

10. Schneidwerkzeugeinrichtung nach einem der Ansprüche 6 bis 9, **dadurch gekennzeichnet, dass** die Halteglieder (76, 78) einen sich in Umfangsrichtung über einen Winkelbereich von weniger als 180° erstreckenden Haltebereich (74) des Werkzeugkopfes (12) zwischen sich aufnehmen.

11. Schneidwerkzeugeinrichtung nach Anspruch 10, **dadurch gekennzeichnet, dass** die Halteglieder (76, 78) einander gegenüberliegende, federnde Drückstücke (80, 82) aufweisen.

12. Schneidwerkzeugeinrichtung nach Anspruch 11, **dadurch gekennzeichnet, dass** die Druckstücke (80, 82) fluchtend zueinander ausgerichtet sind.

13. Schneidwerkzeugeinrichtung nach Anspruch 11 oder 12, **dadurch gekennzeichnet, dass** die Druckstücke (80, 82) jeweils einen Druckkörper (84, 86) aufweisen, der von einer Druckfeder (88, 90) mit einer Federkraft beaufschlagbar ist, wobei die Federkräfte der beiden Druckstücke (80, 82) einander entgegengerichtet sind.

14. Schneidwerkzeugeinrichtung nach einem der Ansprüche 6 bis 13, **dadurch gekennzeichnet, dass** die Halteglieder (76, 78) Vorsprünge ausbilden, die aus einer dem Werkzeugkopf (12) zugewandten Rückseite (50) der Anzeigevorrichtung (16) herausragen.

15. Schneidwerkzeugeinrichtung nach einem der voranstehenden Ansprüche, **dadurch gekennzeichnet, dass** die Anzeigevorrichtung (16) und der Werkzeugkopf (12) einander zugeordnete elektrische Kontaktelemente (52, 54) aufweisen zur Herstellung einer elektrischen Verbindung zwischen der Messvorrichtung (44) und der Anzeigeeinheit (48).

16. Schneidwerkzeugeinrichtung nach einem der Ansprüche 6 bis 14, **dadurch gekennzeichnet, dass** die Anzeigevorrichtung (16) und der Werkzeugkopf (12) einander zugeordnete elektrische Kontaktelemente (52, 54) aufweisen zur Herstellung einer elektrischen Verbindung zwischen der Messvorrichtung (44) und der Anzeigeeinheit (48), wobei die Kontaktelemente (52) der Anzeigevorrichtung (16) axial versetzt zu den Haltegliedern (76, 78) angeordnet sind.

17. Schneidwerkzeugeinrichtung nach Anspruch 16, **dadurch gekennzeichnet, dass** der Werkzeugkopf (12) eine Kontaktausnehmung (56) aufweist, in der die Kontaktelemente (54) des Werkzeugkopfes (12) angeordnet sind.

18. Schneidwerkzeugeinrichtung nach einem der voranstehenden Ansprüche, **dadurch gekennzeichnet, dass** die Anzeigevorrichtung (16) eine Energieversorgungseinheit (98) aufweist.

## Claims

1. Cutting tool apparatus comprising a tool head (12) rotatingly drivable about an axis of rotation (14), which tool head has a tool slide (24) adjustable along an adjustment axis (26) and an electrical measuring device (44) for detecting an adjustment path of the tool slide (24), and comprising an external display device (16) which is mechanically and electrically releasably connectable to the tool head (12) and has a display unit (48) for displaying the adjustment path of the tool slide (24), **characterized in that** the display device (16) is mechanically securable on the stationary tool head (12) in order to set the tool slide (24) and is automatically releasable from the tool head (12) if a predeterminable rotational acceleration of the tool head (12) is exceeded, wherein the display device (16) has at least one holding member (76, 78), the tool head (12) being subjectable to a predeterminable holding force by the at least one holding member (76, 78), and wherein the at least one holding member (76, 78) has a setting mechanism (77, 79, 84, 86) for setting the holding force exerted on the tool head (12) by the holding member (76, 78).

2. Cutting tool apparatus in accordance with Claim 1, **characterized in that** the display device (16) is layable onto a lateral surface (18) of the tool head (12) in a joining direction (106) orientated obliquely or perpendicularly to the axis of rotation (14).

3. Cutting tool apparatus in accordance with Claim 2, **characterized in that** the tool head (12) has a cylindrical lateral surface (18) and **in that** the display device (16) has a plane rear side (50), with which it contacts the cylindrical lateral surface (18) linearly.

4. Cutting tool apparatus in accordance with any one of the preceding Claims, **characterized in that** the display device (16) is releasably latchable to the stationary tool head (12).

5. Cutting tool apparatus in accordance with any one of the preceding Claims, **characterized in that** the at least one holding member (76, 78) is able to be mechanically brought into engagement with the tool head (12).

6. Cutting tool apparatus in accordance with any one of the preceding Claims, **characterized in that** the display device (16) has two holding members (76, 78) which are insertable into two holding recesses (58, 60) arranged at a distance from one another in the direction of rotation of the tool head (58, 60).

7. Cutting tool apparatus in accordance with Claim 6, **characterized in that** the holding recesses (58, 60) are open at their outer sides facing way from one another.

8. Cutting tool apparatus in accordance with any one of Claims 6 or 7, **characterized in that** at their mutually facing inner sides (66, 68) the holding recesses have each at least one latching element (70, 72) which cooperates with an associated latching element (84, 86) of the holding member (76, 78) insertable into the holding recess (58, 60).

9. Cutting tool apparatus in accordance with any one of Claims 6, 7, or 8, **characterized in that** the two holding members (76, 78) each form a form closure with the holding recesses (58, 60).

10. Cutting tool apparatus in accordance with any one of Claims 6 to 9, **characterized in that** the holding members (76, 78) receive between them a holding region (74) of the tool head (12) extending over an angular region of less than 180° in the circumferential direction of the tool head (12).

11. Cutting tool apparatus in accordance with Claim 10, **characterized in that** the holding members (76, 78) have spring-mounted pressure pieces (80, 82) lying opposite one another.

12. Cutting tool apparatus in accordance with Claim 11, **characterized in that** the pressure pieces (80, 82) are aligned flush with one another.

13. Cutting tool apparatus in accordance with Claim 11 or 12, **characterized in that** the pressure pieces (80, 82) each have a pressure body (84, 86) which is subjectable to a spring force by a compression spring (88, 90), the spring forces of the two pressure pieces (80, 82) being directed opposite one another.

14. Cutting tool apparatus in accordance with any one of Claims 6 to 13, **characterized in that** the holding members (76, 78) form projections which project from a rear side (50) of the display device (16) facing the tool head (12).

15. Cutting tool apparatus in accordance with any one of the preceding Claims, **characterized in that** the display device (16) and the tool head (12) have electrical contact elements (52, 54) associated with one another to establish an electrical connection between the measuring device (44) and the display unit (48).

16. Cutting tool apparatus in accordance with any one of Claims 6 to 14, **characterized in that** the display device (16) and the tool head (12) have electrical contact elements (52, 54) associated with one another to establish an electrical connection between the measuring device (44) and the display unit (48), the contact elements (52) of the display device (16) being arranged axially offset from the holding members (76, 78).

17. Cutting tool apparatus in accordance with Claim 16, **characterized in that** the tool head (12) has a contact recess (56), in which the contact elements (54) of the tool head (12) are arranged.

18. Cutting tool apparatus in accordance with any one of the preceding Claims, **characterized in that** the display device (16) has an energy supply unit (98).

## Revendications

1. Dispositif d'outil de coupe pourvu d'une tête d'outil (12) qui peut être entraînée en rotation autour d'un axe de rotation (14) et qui comprend un chariot porte-outils (24) mobile le long d'un axe de déplacement (26) et un dispositif de mesure électrique (44) destiné à détecter une course de déplacement du chariot porte-outils (24), et d'un dispositif d'affichage (16) externe qui peut être relié mécaniquement et électriquement de manière amovible à la tête d'outil (12) et qui présente une unité d'affichage (48) destinée à afficher la course de déplacement du chariot porte-outils (24), **caractérisé en ce que** le dispositif d'affichage (16) peut être fixé mécaniquement à la tête d'outil (12) fixe pour le réglage du chariot porte-outils (24) et, lorsqu'une accélération rotative pouvant être prédéfinie de la tête d'outil (12) est dépassée, peut être détaché automatiquement de la tête d'outil (12), dans lequel le dispositif d'affichage (16) comprend au moins un organe de retenue (76, 78) et la tête d'outil (12) peut être soumise à une force de retenue pouvant être prédéfinie par le au moins un organe de retenue (76, 78), et dans lequel le au moins un organe de retenue (76, 78) comprend un mécanisme de réglage (77, 79, 84, 86) pour régler la force de retenue exercée par l'organe de retenue (76, 78) sur la tête d'outil (12).

2. Dispositif d'outil de coupe selon la revendication 1, **caractérisé en ce que** le dispositif d'affichage (16) peut être appliqué contre une surface extérieure (18) de la tête d'outil (12) dans une direction d'assemblage (106) orientée de manière oblique ou perpendiculaire à l'axe de rotation (14).

3. Dispositif d'outil de coupe selon la revendication 2, **caractérisé en ce que** la tête d'outil (12) présente une surface extérieure (18) cylindrique et **en ce que** le dispositif d'affichage (16) présente une face arrière (50) plate par laquelle il est en contact linéaire avec la surface extérieure (18) cylindrique.

4. Dispositif d'outil de coupe selon l'une quelconque des revendications précédentes, **caractérisé en ce que** le dispositif d'affichage (16) peut être encliqueté de manière amovible avec la tête d'outil (12) fixe.

5. Dispositif d'outil de coupe selon l'une quelconque des revendications précédentes, **caractérisé en ce que** le au moins un organe de retenue (76, 78) peut être amené en prise avec la tête d'outil (12).

6. Dispositif d'outil de coupe selon l'une quelconque des revendications précédentes, **caractérisé en ce que** le dispositif d'affichage (16) comprend deux organes de retenue (76, 78) qui peuvent être insérés dans deux évidements de retenue (58, 60) espacés l'un de l'autre dans le sens de rotation de la tête d'outil (12) .

7. Dispositif d'outil de coupe selon la revendication 6, **caractérisé en ce que** les évidements de retenue (58, 60) sont ouverts par leurs faces extérieures opposées les unes aux autres.

8. Dispositif d'outil de coupe selon la revendication 6 ou 7, **caractérisé en ce que** les évidements de retenue présentent sur leurs faces intérieures (66, 68) tournées les unes vers les autres respectivement au moins un élément d'encliquetage (70, 72) qui coopère avec un élément d'encliquetage (84, 86) associé de l'organe de retenue (76, 78) pouvant être inséré dans l'évidement de retenue (58, 60).

9. Dispositif d'outil de coupe selon l'une quelconque des revendications 6, 7 ou 8, **caractérisé en ce que** les deux organes de retenue (76, 78) forment respectivement une complémentarité de formes avec les évidements de retenue (58, 60).

10. Dispositif d'outil de coupe selon l'une quelconque des revendications 6 à 9, **caractérisé en ce que** les organes de retenue (76, 78) présentent entre eux une zone de retenue (74) de la tête d'outil (12) s'étendant dans la direction périphérique sur une plage angulaire inférieure à 180°.

11. Dispositif d'outil de coupe selon la revendication 10, **caractérisé en ce que** les organes de retenue (76, 78) présentent des pièces de poussée (80, 82) élastiques opposées les unes aux autres.

12. Dispositif d'outil de coupe selon la revendication 11, **caractérisé en ce que** les pièces de poussée (80, 82) sont au même niveau les unes que les autres.

13. Dispositif d'outil de coupe selon la revendication 11 ou 12, **caractérisé en ce que** les pièces de poussée (80, 82) présentent respectivement un corps de poussée (84, 82), qui peut être soumis à une force élastique par un ressort de poussée (88, 90), dans lequel les forces élastiques des deux pièces de poussée (80, 82) sont orientées en sens inverse.

14. Dispositif d'outil de coupe selon l'une quelconque des revendications 6 à 13, **caractérisé en ce que** les organes de retenue (76, 78) forment des parties saillantes qui font saillie d'une face arrière (50) du dispositif d'affichage (16) tournée vers la tête d'outil (12).

15. Dispositif d'outil de coupe selon l'une quelconque des revendications précédentes, **caractérisé en ce que** le dispositif d'affichage (16) et la tête d'outil (12) présentent des éléments de contact (52, 54) électriques associés les uns aux autres pour l'établissement d'une liaison électrique entre le dispositif de mesure (44) et l'unité d'affichage (48).

16. Dispositif d'outil de coupe selon l'une quelconque des revendications 6 à 14, **caractérisé en ce que** le dispositif d'affichage (16) et la tête d'outil (12) présentent des éléments de contact (52, 54) électriques associés les uns aux autres pour l'établissement d'une liaison électrique entre le dispositif de mesure (44) et l'unité d'affichage (48), dans lequel les éléments de contact (52) du dispositif d'affichage (16) sont décalés axialement des organes de retenue (76, 78).

17. Dispositif d'outil de coupe selon la revendication 16, **caractérisé en ce que** la tête d'outil (12) présente un évidement de contact (56) dans lequel les éléments de contact (54) de la tête d'outil (12) sont agencés.

18. Dispositif d'outil de coupe selon l'une quelconque des revendications précédentes, **caractérisé en ce que** le dispositif d'affichage (16) présente une unité d'alimentation en énergie (98).
